Europäisches Patentamt

European Patent Office

Office européen des brevets

(11) Publication number: **0 304 342**
**A2**

## (12) EUROPEAN PATENT APPLICATION

(21) Application number: 88307768.7

(22) Date of filing: 22.08.88

(51) Int. Cl.⁴: **G 05 D 1/02**
**B 25 J 5/00**

(30) Priority: 21.08.87 US 87928

(43) Date of publication of application:
22.02.89 Bulletin 89/08

(84) Designated Contracting States:
BE CH DE ES FR GB IT LI NL SE

(71) Applicant: **WESTINGHOUSE ELECTRIC CORPORATION**
**Westinghouse Building Gateway Center**
**Pittsburgh Pennsylvania 15222 (US)**

(72) Inventor: **Barry, Robert Francis**
**1318 Woodcliffe Drive**
**Monroeville Pennsylvania 15146 (US)**

(74) Representative: **van Berlyn, Ronald Gilbert**
**23, Centre Heights**
**London, NW3 6JG (GB)**

(54) **Method and apparatus for autonomous vehicle guidance.**

(57) A system that allows a vehicle (8) to autonomously move toward an arbitrary destination over an irregular surface where home base can be out of sight. During the outward bound journey, a robot (18) or the vehicle (8) places path markers (10) along the route. A tracking system tracks the most recently placed marker (10) and records outbound movement of the vehicle (8) relative to the marker (10). Each marker (10) includes flashing colored lights (42) that allow the marker (10) to produce a unique identification signal. When a marker (10) goes out of sight for a predetermined distance and cannot be found by side to said and up/down camera scans, the robot (18) places another marker on the ground. During a return trip in an inward bound direction toward home base, the tracking system tracks the most recently placed marker (10) and guides the vehicle (8) to the marker (10). When the most recently placed marker (10) is reached, the robot (18) can pick up the marker (10) or bypass the marker (10) and then the vehicle (8) tracks the next most recently placed marker (10).

FIG. I

EP 0 304 342 A2

**Description**

## METHOD AND APPARATUS FOR AUTONOMOUS VEHICLE GUIDANCE

This invention is directed to a guidance system for an autonomous vehicle and, more particularly, to a system that allows the vehicle to follow an arbitrary path on an outward bound journey during which path markers are placed along the route and can be retrieved during the return to home base.

Conventional autonomous vehicles have a home base at which the vehicle is serviced, recharged etc. These vehicles have a guidance system that allows the vehicle to follow a predefined path to a predefined destination. The guidance system provides directional control signals to a directional control and drive system which propels the vehicle in the desired direction. The guidance system can monitor path markers previously placed along the route such as reflective markers or magnetic strips. Some of these guidance systems can also determine vehicle position by geometric triangulation of previously fixed targets. Each of the conventional systems requires the previous placement of path markers or guidance markers before the vehicle can leave home base and travel to the destination.

It is the object of the present invention to provide a robotic vehicle control system capable of returning to its home base even when the outward bound destination is at an arbitrary location.

With this object in view the present invention resides in a method of autonomous vehicle guidance comprising the steps of (a) controlling the vehicle in an outward bound direction, and (b) controlling the vehicle in an inward bound direction toward home; characterized by step (a) including the steps of: (a1) tracking a fixed position marker positioned in an inward bound direction while moving in an outward bound direction, and (a2) placing a new marker when the marker is out of sight for a predetermined distance; and step (b) including the steps of: (b1) tracking a most recently placed marker while moving toward the most recently placed marker, and (b2) retrieving the most recently placed marker when it is reached.

The invention further resides in an apparatus for autonomous guidance of a vehicle, characterized in that comprising: a marker detector-tracker for identifying one among several markers; a vehicle controller for moving the vehicle away from a marker in a predetermined direction or toward a marker; and a placement and retrieval device for placing markers in an outward bound direction and retrieving markers in an inward bound direction.

The system includes a vehicle that moves toward the destination in an outward bound direction while a tracking system tracks a most recently placed path marker. Each marker produces an identification signal which the tracking system uses to identify the most recently placed marker. When the marker goes out of sight for a predetermined distance, the robot places another marker on the ground. Eventually the destination is reached. During a return trip in an inward bound direction toward home base, the tracking system tracks the most recently placed marker. When the most recently placed marker is reached, the robot can pick up the marker or bypass the marker, and then the system tracks the next most recently placed marker. Eventually home base is reached.

The invention will become more readily apparent from the following description of a preferred embodiment thereof shown, by way of example only, in the accompanying drawings, wherein:

Figs. 1 and 2 depict an autonomous vehicle 8 according to the present invention;

Figs. 3A and 3B illustrate details of a camera 14 and a camera platform 16;

Fig. 4 provides details of the vehicle rack 20;

Figs. 5A-5D shows details of a robot hand 30 in various positions with Fig. 5D illustrating sensors 32 in the hand 30;

Fig. 6 depicts details of the path marker 10 of the present invention;

Fig. 7 illustrates the components of the tracking system;

Fig. 8, including Figs. 8A and 8B, is a flowchart of a procedure for determining when to place path markers 10 on an outward bound journey;

Fig. 9, including Figs. 9A and 9B, is a flowchart of a routine which removes a marker 10 from the rack 20 and places it on the ground;

Fig. 10 is a flowchart of a control program for following path markers 10 back to home base; and

Fig. 11, including Figs. 11A and 11B, is a procedure for picking up each marker 10 as it is reached on the return trip.

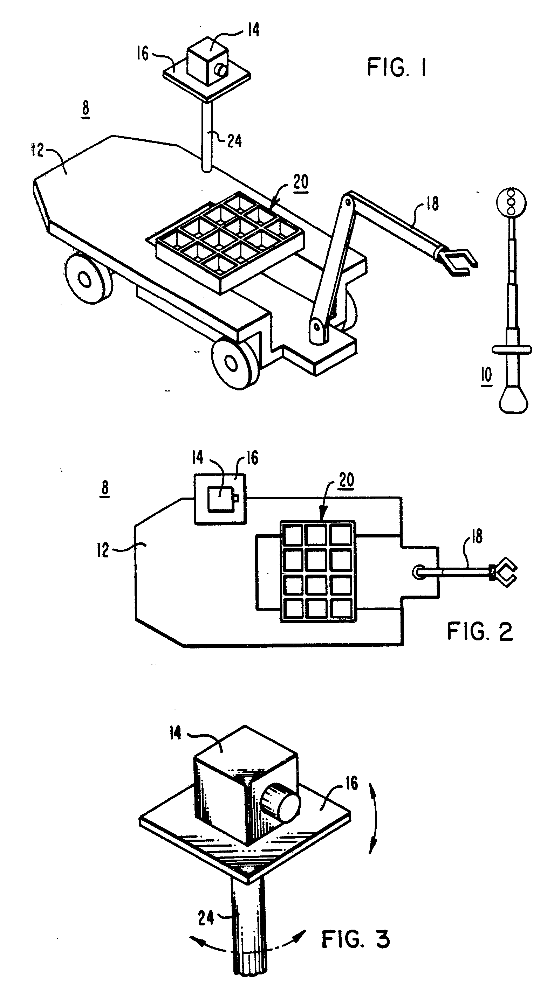

The present invention includes a vehicle 8, as illustrated in Figs. 1 and 2, that places path markers 10 on the ground during an outward bound journey to an arbitrary destination as guided by a destination program provided in a vehicle directional control and the drive system. The vehicle 8 uses the path markers 10 to return to home base and can pick the markers 10 up along the way.

The vehicle 8 includes a conventional directional control and drive system that uses a conventional directional control program to guide a conventional movable platform 12 toward the destination. A collision avoidance system is usually provided in such a vehicle. An Autonomous Land Vehicle developed by Carnegie-Mellon University of Pittsburgh, Pennsylvania, under contract with DARPA is an example of such conventional platform with a suitable directional control and drive system driven by a destination program. The vehicle 8 also includes a conventional color camera 14, such as a solid state RGB camera, by Sony, mounted on a conventional two axis servo mechanism platform 16 that includes platform position outputs. The images produced by the camera 14 are captured and analyzed by a conventional image processing system such as a PC vision-Color System from Imaging Technology, Inc. This system includes color frame grabbers memories and is capable of outputting the coordinates of colored pixels in the visual image produced by the camera 14. A computer such as an IBM PC/AT controls the camera 14 and provides appropriate guidance commands to the platform 12 and to a conventional robot 18 such as a Unimation Puma 260. When a previously placed path marker 10 goes out of sight of the camera 14 for a predetermined distance, the robot 18 is commanded to remove a path marker 10 from the marker rack 20 and place the marker 10 on the ground. During the return trip the robot 18 can be commanded to pick up or bypass each marker 10.

The camera platform 16 is mounted on a boom 24 as depicted in Fig. 3A. The boom 24 positions the platform 16 so that the camera 14 has an unobstructed 360 degree view around the vehicle 8 over the robot 18 and at least a seventy degree unobstructed azmithal view below the horizontal planar reference provided by the vehicle 8 and at least one hundred and eighty degrees left and right in fixed pitch increments. The platform 16 preferably can vertically track at least seventy degrees both above and below the horizontal vehicle reference.

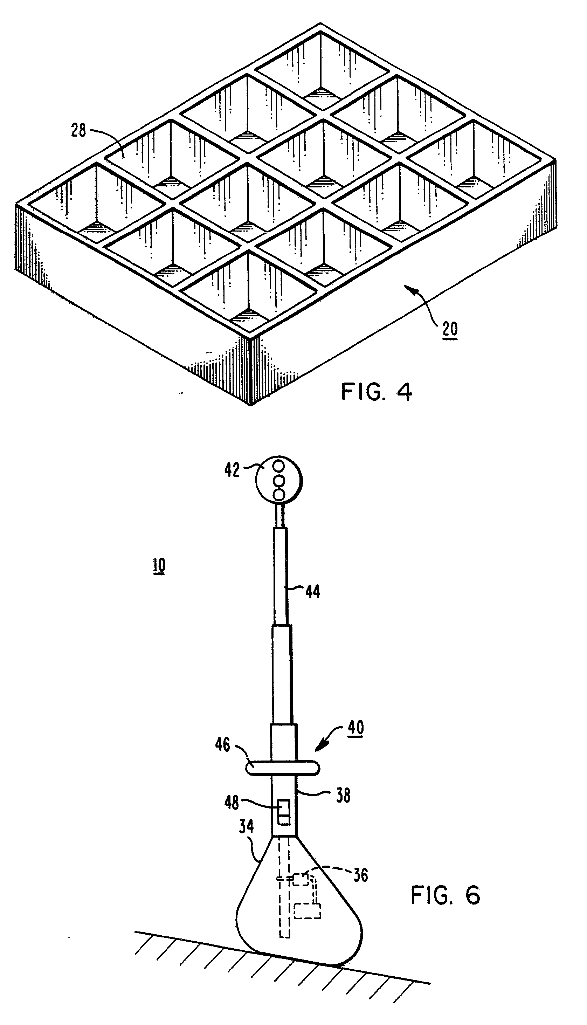

The rack 20, as illustrated in Fig. 4, has plural storage compartments 28 preferably about eight inches wide and six inches deep at known positions with respect to the robot 18. The rack 20 hold the markers 10 even when the vehicle is on uneven ground.

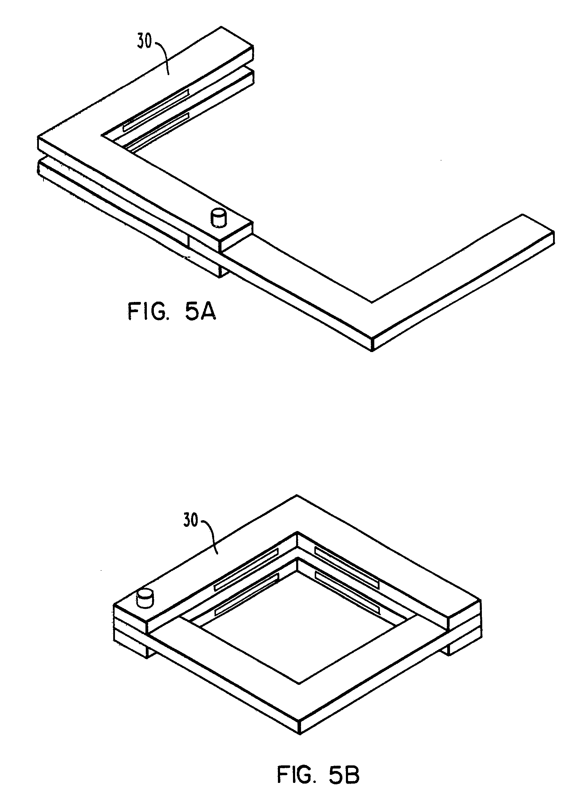

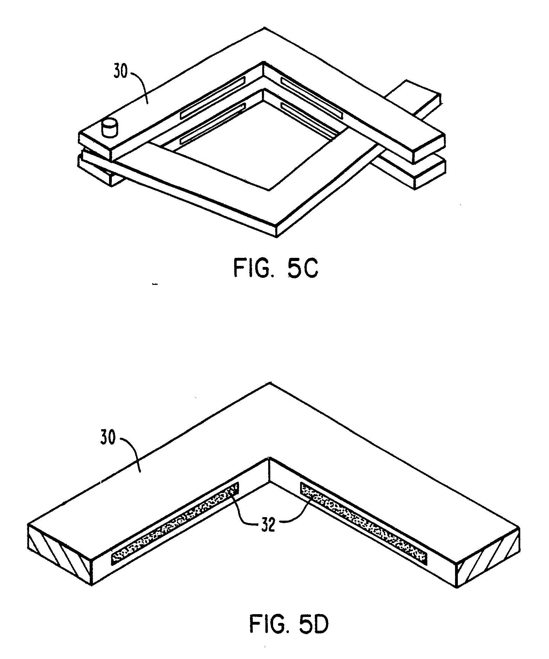

The robot 18 includes a three fingered hand 30 with three basic positions as illustrated in Figs. 5A-5C. In the open position of Fig. 5A the hand can pass around the marker 10 during placement and retrieval. In the closed position of Fig. 5C, the robot can reliably pick up the marker 10 during placement and retrieval. The intermediate hand position of Fig. 5B is used to determine whether the marker 10 is in an upright stable position during placement. With the hand 30 partially opened, the marker 10 is free to tilt. Sensors 32, such as the contact switches illustrated in Fig. 5D, are activated when the marker 10 tilts with the hand 30 in the intermediate position. When the sensors 32 detect an unstable marker 10. The robot 18 is commanded to pick up the marker 10 and the vehicle 8 is moved a predetermined distance toward home, such as three feet, and placement is again attempted. If necessary the vehicle 8 can move all the way back to the previously placed marker 10 while attempting to place a new marker 10.

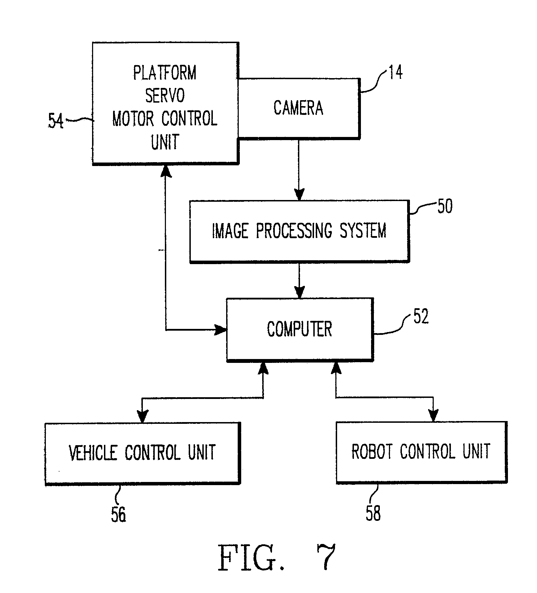

Each marker 10 is a battery operated light mast unit as illustrated in Fig. 6 and includes a base 34, such as a flexible bag containing stones that will adapt to a rough or canted surface. A battery-flasher and extension control unit 36 are positioned in the bag 34 and attached to a fixed section 38 of a mast 40. The flasher can be similar to the units used for traffic control on road construction sites. The flasher unit controls the flashing of three different colored lights (for example, red, green and blue) located in a beacon 42 attached to the top of a telescoping portion 44 of the mast 40.

The lights which flash are different for each marker 10 in each group of seven markers 10 in the rack 20. That is the first marker 10 may flash red, green and blue, the second marker 10, red and green, the third marker 10, red and blue, etc. With a predetermined set of lights flashing for each marker 10, the tracking system, which keeps a record of the order of marker 10 placement, can identify the next marker 10 on a return trip even when several markers 10 are in view. Each marker 10 preferably flashes only after being placed on the ground and at intervals of two seconds with an on period of one second. This will insure that the camera imaging system, which captures an image every 1/20 seconds, will detect a flash. To unequivocally determine that a light image has been captured, at least two images should be captured and compared for each position of the camera. To determine color each frame grabber memory must be analyzed in turn. It is possible to vary the flash frequency between groups of seven markers 10 if necessary to provide enhanced ability to identify placed markers 10. It is also possible to provide additional colored lights such as a yellow or infrared light if additional target identification capability is necessary.

A shoulder or ledge 46 is provided on the fixed mast section 38 and will stop the robot hand 30 from slipping off the marker 10 in adverse weather conditions such as when ice builds up on the mast 40. During the tilt detection maneuver after the hand 30 is opened to the intermediate position, the hand 30 is moved down two inches and away from the marker 10 by two inches to allow the marker 10 to tilt if it will. This movement also moves the hand 30 away from the supporting ledge 46. The telescoping section 44 is preferably solenoid controlled and activated by a lever switch 48. The switch 48 not only causes the mast 40 to telescope outward to a height of four feet when removed from the rack 20 but also causes retraction when placed in the rack 20. The switch 50 also turns on the flasher.

As the camera 14 samples an image, it is transferred to conventional image processing system 50, previously mentioned and illustrated in Fig. 7, which outputs color coordinates to the computer 52 for each image pixel that is colored. The computer 52, using standard image processing techniques, such as can be found in Pavlidis, Algorithms for Graphic and Image Processing, Computer Science Press, Rockville, Maryland, 1982, and Pavlidis, Quad Tree Representation, Computer Science Press, Rockville, Maryland, 1982, both incorporated herein by reference, determine the location of the colored images representing the lights in the beacon 42. The computer 52 sends axis control commands to a control unit 54 for the servo motors of the camera platform 16. The computer 52 controls the camera 14 and centers the light image in the camera image field vertically using known image centering techniques while the vehicle 12 is moving in both outward and homeward bound directions. During the outward bound journey, the computer 52 also provides axis control commands to keep the images centered horizontally using the known centering techniques. During a return trip, the computer 52 gives directional control commands to the conventional vehicle control unit 56. The directional control commands orient the vehicle 8 during the return trip to pass to the side of a marker 10. This is accomplished by keeping the camera 14 pointed directly forward on the vehicle 8 and keeping the light

EP 0 304 342 A2

images at an offset from the horizontal center in the camera image field by controlling vehicle 8 direction. The offset tracking technique allows an estimate of the distance to the marker 10 to be computed so that an approach routine can be called to pick-up the marker 10. The distance determination technique will be discussed in more detail later. When the vehicle 8 is within reach of the marker 10, the computer 52 commands the robot control unit 58 to pick-up the marker 10. When an error or failure occurs, the computer 52 can signal for help through a radio signaling unit which is not shown.

The robot 18 must be able to reach to within several inches of the ground at a reasonable distance from the vehicle 8 such as two feet. This is accomplished by mounting the robot 18 on a rearward platform that is close to the ground. The robot 18 must also be able to reach each position of the storage rack 20.

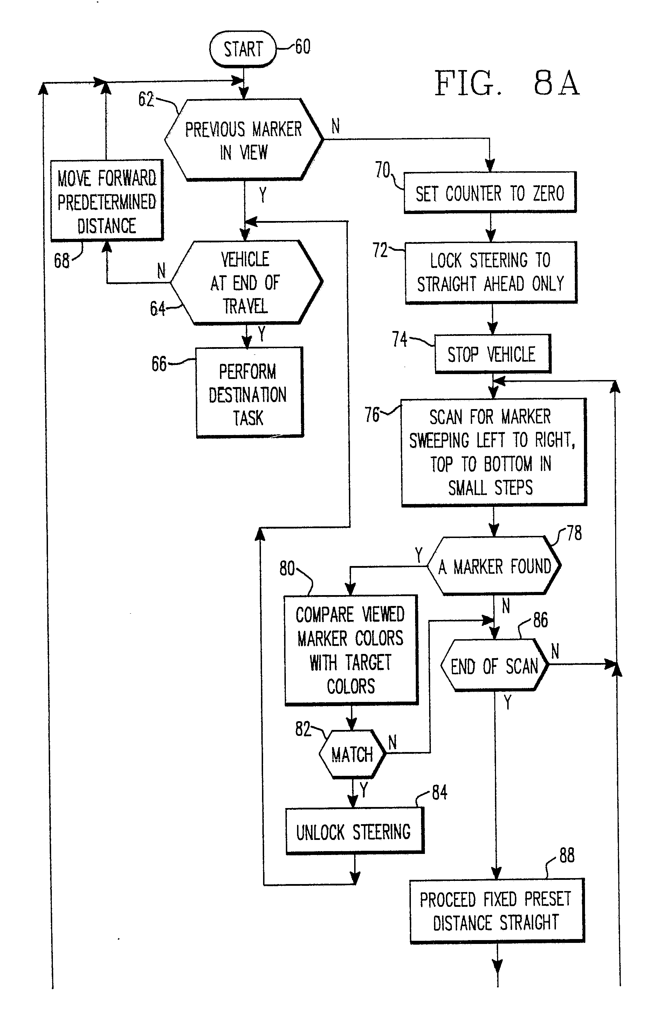

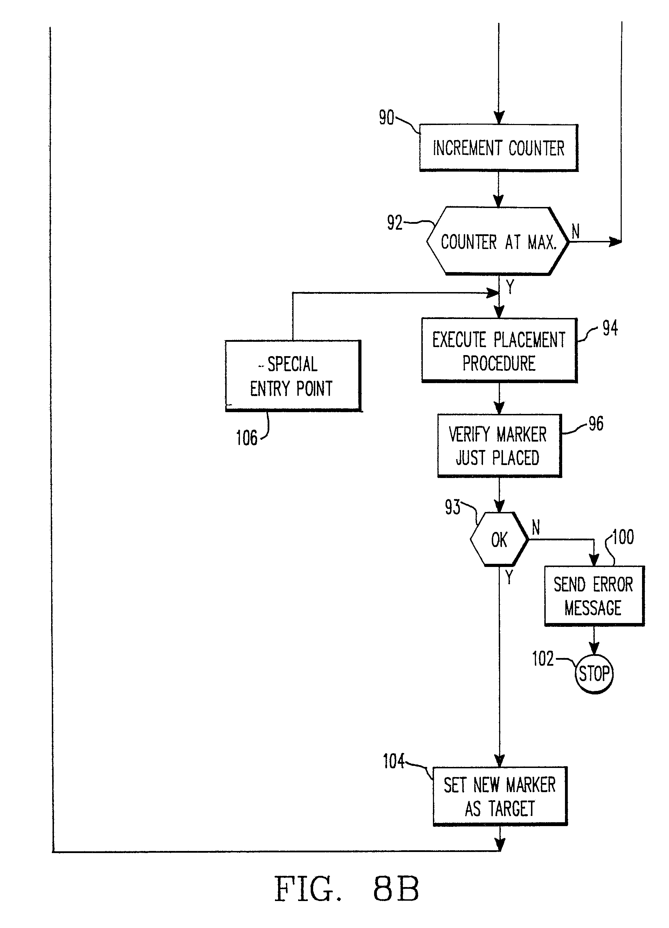

During the outward bound journey toward the arbitrary destination, the marker 10 tracking system performs the procedure illustrated in Fig. 8. When an image is captured, it is analyzed 62 to determine whether the last placed marker 10 or the home marker, if no markers 10 have been placed, is in view. The computer 52 compares the colors of the captured image with the previously placed marker 10. If the correct marker 10 is in view, the processor 52 compares 64 the current position of the vehicle 8 with the destination and orders 66 the performance of the destination task if the destination has been reached. Otherwise, the vehicle is moved 68 forward continuously for a predetermined distance such as three meters at which time another image is captured and processed.

If the previous marker 10 moves out of view, the routine sets 70 a counter to zero. The counter allows the vehicle 8 to continue moving forward a predetermined distance such as ten meters in increments of two meters while looking for the previous marker 10. After the counter is set to zero, the steering is locked 72 straight ahead and the vehicle is stopped 74. A scan 76 is then performed by moving the camera a predetermined angle from its current position. If a marker 10 is found 78, it is compared 80 with the colors of the marker 10 the tracking system is seeking. If there is a match 82, the steering is unlocked 84 and the vehicle moves forward again. If no marker 10 is found, the incremental scan 76 continues. If the end of the scan has been reached 86, the vehicle 8 is allowed to go forward 88 the preset distance. The counter is incremented 90 and tested 92 to see if the predetermined distance has been traveled. If not the vehicle 8 continues moving forward while looking for the previously placed marker 10.

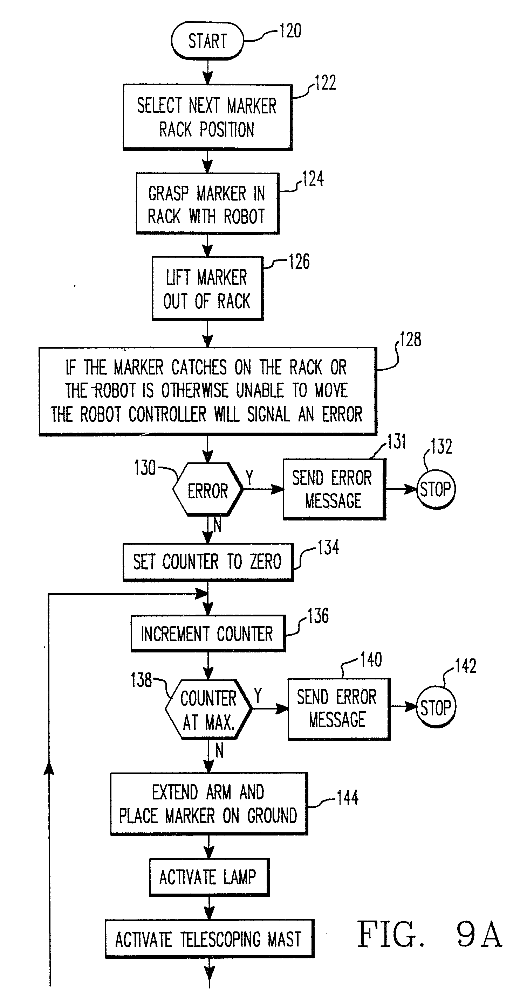

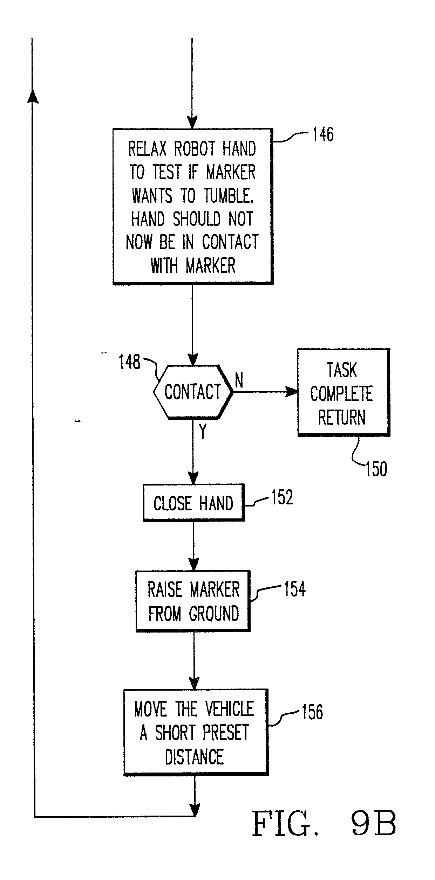

If the counter is at the maximum, a marker 10 placement routine, as illustrated in Fig. 9, is executed 94 and the operation of the marker 10 is verified 96. If the marker 10 is not operating, an error message can be sent 100 by radio. The vehicle 8 could also try to place another marker 10 or return to home base. If the marker 10 is working this marker 10 is designated 104 as the most recently placed marker 10 after which the outward bound travel continues under the control of the destination program.

The placement procedure illustrated in Fig. 9 begins with the computer 52 selecting 122 the next available marker 10 from a list of available markers 10 in the rack 20 and gripping 124 the marker 10. Since the position of the marker 10 in the rack 20 is known, the computer 52 need only send the rack position to the robot controller 60. The robot 18 is ordered 126 to lift the marker 10 from the rack 20 and if the marker 10 gets stuck the robot controller will signal an error 128. If an error is detected 130 a radio error message can be sent 131. If a rack activated lever switch 50 is used in the marker 10, the flash control and telescope functions are activated as the marker 10 is removed from the rack 20.

When the marker 10 is lifted successfully a counter, which is used to assist in positioning the marker 10 at a stable position on the ground, is set 134 to zero. The procedure then enters a loop which increments 136 the positioning counter, tests 138 the counter and sends an error message if the marker 10 cannot be placed in a stable position. The loop attempts 144 to place the marker 10 on the ground by extending and lowering the robot arm. The robot control unit 60 stops moving the arm downward when a load sensor detects a sudden decrease in the load caused by ground contact. It is also possible to activate the flash unit and telescope function at this time if a different type switch is used.

Once the marker 10 is on the ground the robot hand 30 is relaxed 146 to perform the stability test. If the robot 18 does not detect 148 the marker 10 using sensors 32 when the hand 30 is relaxed to the intermediate position, the hand 30 withdraws to its rest position and the routine returns 150. If the marker 10 is unstable, the hand is closed 152, the marker 10 is raised 154, and the vehicle 8 moves 156 a short predetermined distance of for example one meter after which another attempt to place the marker 10 on the ground is attempted. This vehicle 8 movement can be in the outward bound direction or toward home base. The placement counter prevents outward bound placement attempts from going more than a predetermined distance past the point where the previous marker 10 went out of sight.

At the beginning of a return trip the vehicle 10 turns around so that the robot 18 is on the rear of the vehicle 8. The previously placed marker 10 remains the target and since this marker 10 is currently in sight, it can be maintained in sight as the vehicle 8 turns around. The last placed marker 10 can thus advantageously act as a reference for a direction reversal.

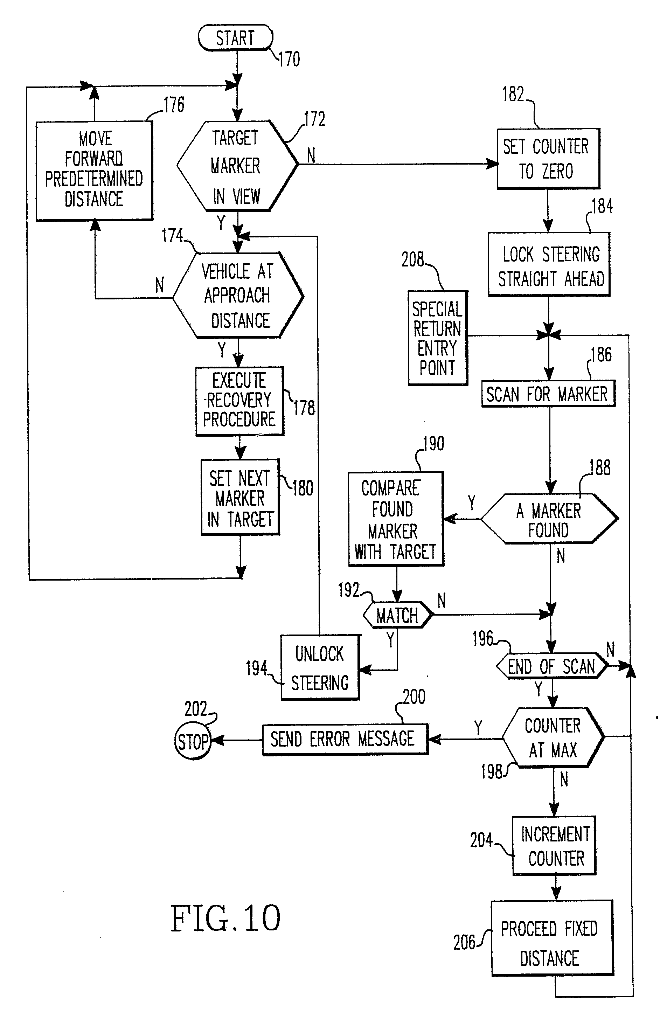

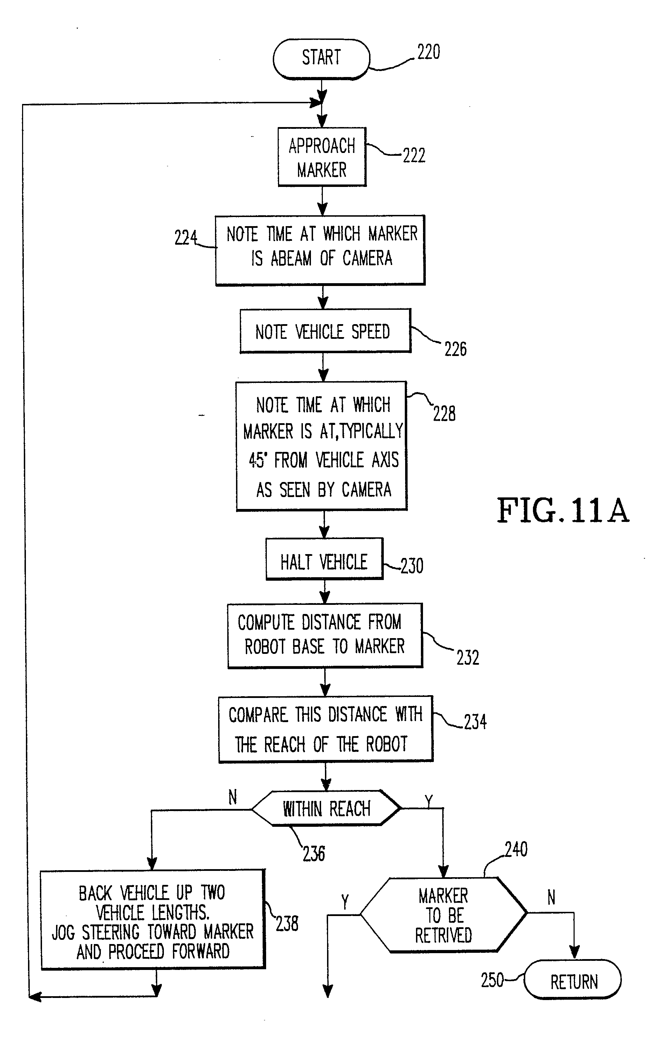

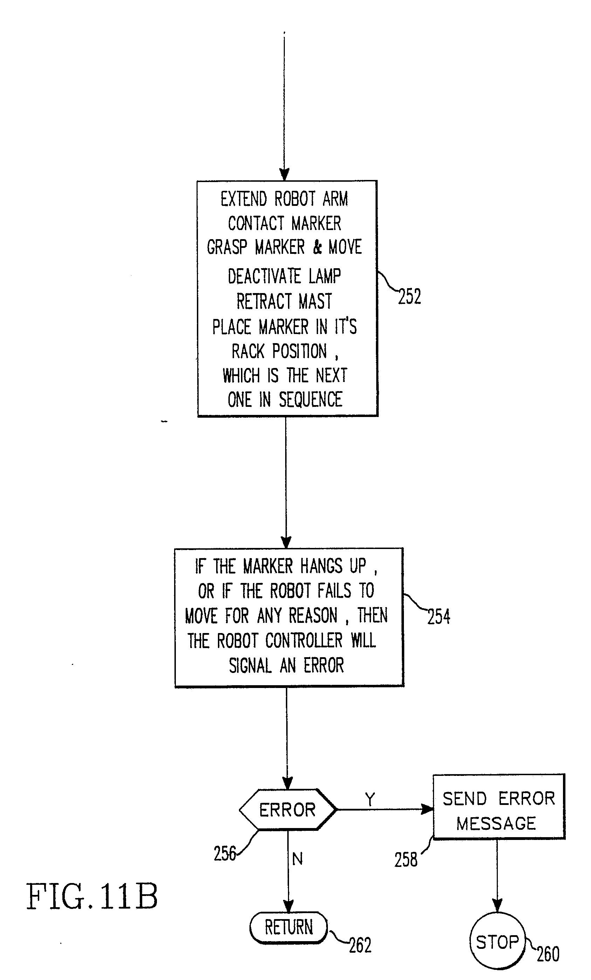

During the movement back toward home, the tracking process of Fig. 10 examines 172 the video image for the marker 10. While the vehicle 8 is approaching the marker 10, the process is determining 174 whether a predetermined approach distance for picking up the marker 10 has been reached. This determination can be made by comparing the successive images while the vehicle 8 is guided to the side of the marker 10. The change in angle between marker images along with the known travel distance of the vehicle 8 is used to determine the distance by triangulation. This method will be discussed in more detail later. Another method of determining whether the approach distance has been reached is to compare the size of the light images with a

4

known reference size. This method will allow the vehicle 8 to approach the marker 10 in a straight line. As long as the vehicle 8 has not reached the approach distance, the vehicle 8 continues to move forward 176. When the approach distance is reached, the marker 10 recovery procedure of Fig. 11 is executed.

After the marker 10 is retrieved, the next most previously placed marker 10 is designated 180 as the target marker 10. Since this marker 10 will likely be out of sight, the first scan will cause the marker 10 to not be in view. This failure to see the marker 10 can occur during the return trip at other times, however, the return of the marker 10 into view should occur in the same portion of the procedure that looks for a lost marker 10.

When looking for a marker 10, first a pick-up or return to view counter is set 182 to zero and the steering is locked 184 straight ahead. A scan 186 for a marker 10 occurs and when a marker 10 is found, it is compared 190 with the designated target marker 10. If there is a match 192, the procedure continues moving the vehicle 8 toward the marker 10 after unlocking 194 the steering. If the marker 10 found is not the target marker 10, the routine checks 196 for the end of the side to side and top to bottom scan. If the scan is not over, the scan 186 continues. When the scan is over the counter is tested 198 and if at a maximum an error message is sent 200. If the counter is not at the maximum, it is incremented 204 and the vehicle moves 206 forward a predetermined distances such as one meter after which another scan is attempted.

During the marker 10 recovery procedure of Fig. 11, it is important to determine the relative position of the marker 10 and the vehicle 8. The process controls 222 the vehicle 8 to allow it to pass to the side while the vehicle 8 is moving at a constant speed and while rotating the camera 14 to follow the marker 10. To ensure that the marker 10 is heading to the side of the vehicle 8, the heading of the vehicle 8 is compared to the pointing angle of the camera 14. If the heading and the angle are not the same, the heading is adjusted to the right so that the vehicle 8 will not collide with the marker 10. As the marker 10 passes abeam of (perpendicular to) the vehicle 8, the time is recorded 224 along with the speed 226. The time at which the marker 10 is 45 degrees behind the vehicle 8 is stored 228 and the vehicle 8 is halted 230. The processor 52 then computes 232, the distance to the marker 10 by subtracting the times recorded and multiplying the result by the vehicle 8 speed. This result is multiplied by 1.414 to obtain the camera 14 to marker 10 distance. Since the distance between the robot 18 and camera is known, the distance between the robot 18 and marker 10 is known. The distance between the robot 18 and marker 8 is then compared 234 with the reach of the robot 18. If the marker 10 is out of reach, the vehicle 8 is backed up, a predetermined distance such as five meters, the steering is jogged toward the marker 10 a predetermined angle, such as five degrees, and the vehicle 8 is moved forward again.

When the marker 10 is in reach, the procedure checks 240 a pick-up flag to determine if the marker 10 should be picked up. If not the routine returns 250, thereby bypassing the marker 10. When the marker 10 is to be picked up, the known position of the marker 10 is used to extend 252 the robot arm, pick-up the marker 10 and put it in the rack 20. If an error occurs during the pick-up process, an error is signalled by the robot 18. If an error has occurred 256, an error message can be sent 258 and the vehicle 8 stopped. Another alternative is to set the pick-up flag to bypass all markers and allow the vehicle 8 to continue returning to home where the malfunction can be serviced. If no error occurs the task returns to the tracking procedure of Fig. 10.

During the outward bound journey, the vehicle 8 control procedure or destination program may determine that the vehicle 8 should be turned so that the marker 10 will go out of sight or may determine that a marker 10 should be placed on the ground for any other reason. If a special marker 10 should be placed a special entry point 106 can be provided as shown in Fig. 8. If an error or other malfunction occurs during an outward bound journey and the vehicle must return home, a special entry point 208 for this event can also be provided as in Fig. 10.

When a second autonomous vehicle is following the path markers 10 placed by a prior vehicle, it will execute substantially the same routine as the initial vehicle 8. However, during an outward bound journey, when the end of the predetermined distance is reached after a marker 10 goes out of sight, the vehicle will look for the next marker 10 placed by the prior vehicle rather than placing a new marker 10. During a return trip the second vehicle should have its pick-up flag set to indicate no marker 10 pick-up. The second autonomous vehicle actually does not need a pick-up robot 18.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly all suitable modifications and equivalents may be resorted to, falling within the scope of the invention. For example, it is possible to provide a forward looking camera for return trips and a rearward looking camera for the outward bound journey.

Page 13-1                                                    53,772

IDENTIFICATION OF REFERENCE NUMERALS USED IN THE DRAWINGS

| LEGEND | REF. NO. | FIGURE |
|---|---|---|
| CAMERA | 14 | 7 |
| IMAGE PROCESSING SYSTEM | 50 | 7 |
| COMPUTER | 52 | 7 |
| PLATFORM SERVO MOTOR CONTROL UNIT | 54 | 7 |
| VEHICLE CONTROL UNIT | 56 | 7 |
| ROBOT CONTROL UNIT | 58 | 7 |
| START | 60 | 8A |
| PREVIOUS MARKER IN VIEW | 62 | 8A |
| VEHICLE AT END OF TRAVEL | 64 | 8A |
| PERFORM DESTINATION TASK | .66 | 8A |
| MOVE FORWARD PREDETERMINED DISTANCE | 68 | 8A |
| SET COUNTER TO ZERO | 70 | 8A |
| LOCK STEERING TO STRAIGHT AHEAD ONLY | 72 | 8A |
| STOP VEHICLE | 74 | 8A |
| SCAN FOR MARKER SWEEPING LEFT TO RIGHT, TOP TO BOTTOM IN SMALL STEPS | 76 | 8A |
| A MARKER FOUND | 78 | 8A |
| COMPARE VIEWED MARKER COLORS WITH TARGET COLORS | 80 | 8A |
| MATCH | 82 | 8A |
| UNLOCK STEERING | 84 | 8A |
| END OF SCAN | 86 | 8A |
| PROCEED FIXED PRESET DISTANCE STRAIGHT | 88 | 8A |
| INCREMENT COUNTER | 90 | 8B |
| COUNTER AT MAX | 92 | 8B |
| OK | 93 | 8B |
| EXECUTE PLACEMENT PROCEDURE | 94 | 8B |
| VERIFY MARKER JUST PLACED | 96 | 8B |
| SEND ERROR MESSAGE | 100 | 8B |
| STOP | 102 | 8B |
| SET NEW MARKER AS TARGET | 104 | 8B |
| SPECIAL ENTRY POINT | 106 | 8B |
| START | 120 | 9A |

IDENTIFICATION OF REFERENCE NUMERALS USED IN THE DRAWINGS

| LEGEND | REF. NO. | FIGURE |
|---|---|---|
| SELECT NEXT MARKER RACK POSITION | 122 | 9A |
| GRASP MARKER IN RACK WITH ROBOT | 124 | 9A |
| LIFT MARKER OUT OF RACK | 126 | 9A |
| IF THE MARKER CATCHES ON THE RACK OR THE ROBOT IS OTHERWISE UNABLE TO MOVE THE ROBOT CONTROLLER WILL SIGNAL AN ERROR | 128 | 9A |
| ERROR | 130 | 9A |
| SEND ERROR MESSAGE | 131 | 9A |
| STOP | 132 | 9A |
| SET COUNTER TO ZERO | 134 | 9A |
| INCREMENT COUNTER | 136 | 9A |
| COUNTER AT MAX | 138 | 9A |
| SEND ERROR MESSAGE | 140 | 9A |
| STOP | 142 | 9A |
| EXTEND ARM AND PLACE MARKER ON GROUND | 144 | 9A |
| RELAX ROBOT HAND TO TEST IF MARKER WANTS TO TUMBLE.  HAND SHOULD NOT NOW BE IN CONTACT WITH MARKER | 146 | 9B |
| CONTACT | 148 | 9B |
| TASK COMPLETE RETURN | 150 | 9B |
| CLOSE HAND | 152 | 9B |
| RAISE MARKER FROM GROUND | 154 | 9B |
| MOVE THE VEHICLE A SHORT PRESET DISTANCE | 156 | 9B |
| START | 170 | 10 |
| TARGET MARKER IN VIEW | 172 | 10 |
| VEHICLE AT APPROACH DISTANCE | 174 | 10 |
| MOVE FORWARD PREDETERMINED DISTANCE | 176 | 10 |
| EXECUTE RECOVERY PROCEDURE | 178 | 10 |
| SET NEXT MARKER IN TARGET | 180 | 10 |
| SET COUNTER TO ZERO | 182 | 10 |
| LOCK STEERING STRAIGHT AHEAD | 184 | 10 |
| SCAN FOR MARKER | 186 | 10 |

## IDENTIFICATION OF REFERENCE NUMERALS USED IN THE DRAWINGS

| LEGEND | REF. NO. | FIGURE |
|---|---|---|
| A MARKER FOUND | 188 | 10 |
| COMPARE FOUND MARKER WITH TARGET | 190 | 10 |
| MATCH | 192 | 10 |
| END OF SCAN | 196 | 10 |
| COUNTER AT MAX | 198 | 10 |
| SEND ERROR MESSAGE | 200 | 10 |
| STOP | 202 | 10 |
| INCREMENT COUNTER | 204 | 10 |
| PROCEED FIXED DISTANCE | 206 | 10 |
| SPECIAL RETURN ENTRY POINT | 208 | 10 |
| START | 220 | 11A |
| APPROACH MARKER | 222 | 11A |
| NOTE TIME AT WHICH MARKER IS ABEAM OF CAMERA | 224 | 11A |
| NOTE VEHICLE SPEED | 226 | 11A |
| NOTE TIME AT WHICH MARKER IS AT TYPICALLY 45° FROM VEHICLE AXIS AS SEEN BY CAMERA | 228 | 11A |
| HALT VEHICLE | 230 | 11A |
| COMPUTE DISTANCE FROM ROBOT BASE TO MARKER | 232 | 11A |
| COMPARE THIS DISTANCE WITH THE REACH OF THE ROBOT | 234 | 11A |
| WITHIN REACH | 236 | 11A |
| BACK VEHICLE UP TWO VEHICLE LENGTHS. JOG STEERING TOWARD MARKER AND PROCEED FORWARD | 238 | 11A |
| MARKER TO BE RETRIVED | 240 | 11A |
| RETURN | 250 | 11A |
| EXTEND ROBOT ARM CONTACT MARKER GRASP MARKER & MOVE DEACTIVATE LAMP RETRACT MAST PLACE MARKER IN ITS RACK POSITION, WHICH IS THE NEXT ONE IN SEQUENCE | 252 | 11B |

Page 13-4                                                        53,772

IDENTIFICATION OF REFERENCE NUMERALS USED IN THE DRAWINGS

| LEGEND | REF. NO. | FIGURE |
|---|---|---|
| IF THE MARKER HANGS UP, OR IF THE | | |
| ROBOT FAILS TO MOVE FOR ANY REASONS, | | |
| THEN THE ROBOT CONTROLLER WILL SIGNAL | | |
| AN ERROR | 254 | 11B |
| ERROR | 256 | 11B |
| SEND ERROR MESSAGE | 258 | 11B |
| STOP | 260 | 11B |
| RETURN | 262 | 11B |

## Claims

1. A method of autonomous vehicle guidance comprising the steps of (a) controlling the vehicle in an outward bound direction, and (b) coontrolling the vehicle in an inward bound direction toward home; characterized by step (a) including the steps of:
    (a1) tracking (62) a fixed position marker positioned in an inward bound direction while moving (68) in an outward bound direction, and
    (a2) placing (144) a new marker (10) when the marker (10) is out of sight for a predetermined distance; and
step (b) including the steps of:
    (b1) tracking (172) a most recently placed marker (10) while moving (176) toward the most recently placed marker (10), and
    (b2) retrieving (178) the most recently placed marker (10) when it is reached.

2. A method as recited in claim 1, characterized by step (a1) including the steps of:
    (i) stopping (74) the vehicle when the marker (10) is not in the image field of a camera (14);
    (ii) sweep scanning (76) the camera (14) over a camera range of movement while looking for the marker (10);
    (iii) moving (88) the vehicle (8) a predetermined distance;
    (iv) performing steps (ii) - (iii) a predetermined number of times (90); and
    (v) restarting (68) vehicle movement in the outward bound direction if the marker (10) is found.

3. A method as recited in claim 1, characterized by step (a2) including the steps of:
    (i) placing (114) the new marker (10) on the ground;
    (ii) testing (146, 148) to determine if the new marker (10) is upright;
    (iii) picking up (154) the new marker (10) and moving (156) the vehicle (8) a predetermined distance if the new marker is not upright; and
    (iv) repeating steps (i) - (iii) a predetermined number of times (138).

4. A method as recited in claim 1, characterized by step (b2) including the steps of:
    (i) moving toward (222) the most recently placed marker (10) and recording first (224) and second (228) times at which the marker (10) is at first and second predetermined angular positions;
    (ii) stopping (230) the vehicle (8) when the most recently placed marker (10) passes the second angular position;
    (iii) determining (232) a marker distance between the most recently placed marker (10) and the vehicle (8) from a traveling distance the vehicle (8) traveled between the first and second times;
    (iv) comparing (234) the marker distance with the reach of a robot (18) mounted on the vehicle (8);
    (v) picking (252) up the most recently placed marker (10) if within reach of the robot (18); and
    (vi) backing (238) up the vehicle (8) a predetermined distance, turning the vehicle (8) toward the most recently placed marker (10) a predetermined angle and performing steps (i) (iv) again if the most recently placed marker (10) is not within reach of the robot (18).

5. An apparatus for autonomous guidance of a vehicle (8), characterized in that comprising:

a marker detector-tracker (14, 50, 52 and 54) for identifying one among several markers (10);

a vehicle controller (56) for moving the vehicle (8)away from a marker (10) in a predetermined direction or toward a marker (10); and

a placement and retrieval device (58) for placing markers (10) in an outward bound direction and retrieving markers (10) in an inward bound direction.

6. An apparatus as recited in claim 5, characterized by said marker detector-tracker (14, 50, 52 and 54) being adapted to actuate said vehicle controller (56) to move the vehicle (8) a predetermined distance when a marker (10) being tracked goes out of sight and being further adapted to scan for the out-of-sight marker (10) while traveling the predetermined distance.

7. An apparatus as recited in claim 5, characterized by said placement and retrieval device (58) including

a robot (18) mounted on the vehicle (8);

said detector-tracker being adapted to actuate said vehicle controller to back the vehicle (8) up and move toward a to-be-retrieved marker (10) when said marker (10) is out of reach of said robot (18).

8. An apparatus as recited in claim 7, wherein said robot (8) includes tilt sensors (32) for detecting when the marker (10) is tilted after the marker (10) is placed on the ground.

9. An apparatus as recited in claim 5, characterized by said marker (10) comprising:

a signal (42) for signaling an identification of said marker (10);

a stabilizer (34) for stabilizing said signal (42) in an upright position on uneven ground; and

a telescoping mast (40) for raising said signal (42) when said marker (10) is placed on the ground.

FIG. 1

FIG. 2

FIG. 3

FIG. 4

FIG. 6

FIG. 5A

FIG. 5B

FIG. 5C

FIG. 5D

FIG. 7

START — 60

FIG. 8A

62 — PREVIOUS MARKER IN VIEW

N

Y

MOVE FORWARD PREDETERMINED DISTANCE

68

70 — SET COUNTER TO ZERO

72 — LOCK STEERING TO STRAIGHT AHEAD ONLY

VEHICLE AT END OF TRAVEL

64

N

Y

74 — STOP VEHICLE

66 — PERFORM DESTINATION TASK

76 — SCAN FOR MARKER SWEEPING LEFT TO RIGHT, TOP TO BOTTOM IN SMALL STEPS

78 — A MARKER FOUND

Y

N

80 — COMPARE VIEWED MARKER COLORS WITH TARGET COLORS

86 — END OF SCAN

N

Y

82 — MATCH

N

Y

84 — UNLOCK STEERING

88 — PROCEED FIXED PRESET DISTANCE STRAIGHT

90 — INCREMENT COUNTER

92 — COUNTER AT MAX.   N →

Y

106 — SPECIAL ENTRY POINT

EXECUTE PLACEMENT PROCEDURE — 94

VERIFY MARKER JUST PLACED — 96

93 — OK   N →   100

Y

SEND ERROR MESSAGE — 100

102 — STOP

104 — SET NEW MARKER AS TARGET

FIG. 8B

```
              ┌─────────┐
              │  START  │────120
              └─────────┘
                   │
                   ▼
        ┌──────────────────────┐
        │  SELECT NEXT MARKER  │────122
        │    RACK POSITION     │
        └──────────────────────┘
                   │
                   ▼
        ┌──────────────────────┐
        │   GRASP MARKER IN    │────124
        │   RACK WITH ROBOT    │
        └──────────────────────┘
                   │
                   ▼
        ┌──────────────────────┐
        │     LIFT MARKER      │────126
        │     OUT OF RACK      │
        └──────────────────────┘
                   │
                   ▼
 ┌──────────────────────────────────────────┐
 │  IF THE MARKER CATCHES ON THE RACK OR     │────128
 │  THE ROBOT IS OTHERWISE UNABLE TO MOVE    │
 │  THE ROBOT CONTROLLER WILL SIGNAL AN ERROR│
 └──────────────────────────────────────────┘
                   │
                   ▼            ┌──────────────┐       ╭──────╮
            ╱─────────╲    Y    │  SEND ERROR  │       │ STOP │
    130────<   ERROR   >───────▶│   MESSAGE    │──────▶│      │
            ╲─────────╱         └──────────────┘       ╰──────╯
                 │ N               131                    132
                 ▼
        ┌──────────────────────┐
        │  SET COUNTER TO ZERO │────134
        └──────────────────────┘
                 │
                 ▼
        ┌──────────────────────┐
        │   INCREMENT COUNTER  │────136
        └──────────────────────┘
                 │
                 ▼            ┌──────────────┐       ╭──────╮
            ╱─────────╲    Y    │  SEND ERROR  │       │ STOP │
    138────<  COUNTER  >───────▶│   MESSAGE    │──────▶│      │
            ╲ AT MAX. ╱         └──────────────┘       ╰──────╯
                 │ N               140                    142
                 ▼
        ┌──────────────────────┐
        │     EXTEND ARM AND   │────144
        │ PLACE MARKER ON GROUND│
        └──────────────────────┘
                 │
                 ▼
        ┌──────────────────────┐
        │     ACTIVATE LAMP    │
        └──────────────────────┘
                 │
                 ▼
        ┌──────────────────────────┐
        │ ACTIVATE TELESCOPING MAST│
        └──────────────────────────┘
                 │
                 ▼
```

FIG. 9A

RELAX ROBOT HAND
TO TEST IF MARKER
WANTS TO TUMBLE.
HAND SHOULD NOT
NOW BE IN CONTACT
WITH MARKER — 146

148 — CONTACT — N → TASK
COMPLETE
RETURN

— 150

Y

CLOSE HAND — 152

RAISE MARKER
FROM GROUND — 154

MOVE THE VEHICLE
A SHORT PRESET
DISTANCE — 156

FIG. 9B

FIG.10

FIG.11A

EXTEND ROBOT ARM
CONTACT MARKER
GRASP MARKER & MOVE DEACTIVATE LAMP
RETRACT MAST
PLACE MARKER IN IT'S
RACK POSITION ,
WHICH IS THE NEXT
ONE IN SEQUENCE

252

IF THE MARKER HANGS UP ,
OR IF THE ROBOT FAILS TO
MOVE FOR ANY REASON , THEN
THE ROBOT CONTROLLER WILL
SIGNAL AN ERROR

254

ERROR

256

Y

N

SEND ERROR
MESSAGE

258

RETURN

262

STOP

260

FIG. 11B